# EUROPÄISCHE PATENTSCHRIFT

(11) **EP 0 416 391 B1**
(45) Veröffentlichungstag und Bekanntmachung des Hinweises auf die Patenterteilung: **19.10.1994**
(21) Anmeldenummer: 90116220.6
(22) Anmeldetag: 24.08.1990
(51) Int. Cl.: G01B 5/00, G01D 5/26

(54) **Längen- oder Winkelmesseinrichtung**
Device for measuring angles or lengths
Dispositif de mesure d'angles ou de longueurs

(30) Priorität: 06.09.1989 DE 3929629
(43) Veröffentlichungstag der Anmeldung: 13.03.1991
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Szenger, Franz, D-7923 Königsbronn (DE)

(56) Entgegenhaltungen:
- EP-A- 0 123 895
- EP-A- 0 174 451

## Beschreibung

Die Erfindung betrifft eine Längen- oder Winkelmeßeinrichtung mit einem Teilungsträger, der in der Fassung an einem Führungsteil gehalten ist, das einen vom Teilungsträger abweichenden thermischen Ausdehnungskoeffizienten besitzt.

Diese Teilungsträger sind beispielsweise die Glasmaßstäbe von photoelektrischen Längenmeßsystemen, die entweder direkt an die aus Metall, meistens Aluminium, bestehende Führung der betreffenden Maschine angebracht sind, deren Schlittenverschiebung gemessen werden soll, oder in einem separaten, ebenfalls aus Metall bestehenden Anbaugehäuse gefaßt sind, das insgesamt an die betreffende Führung angeschraubt ist.

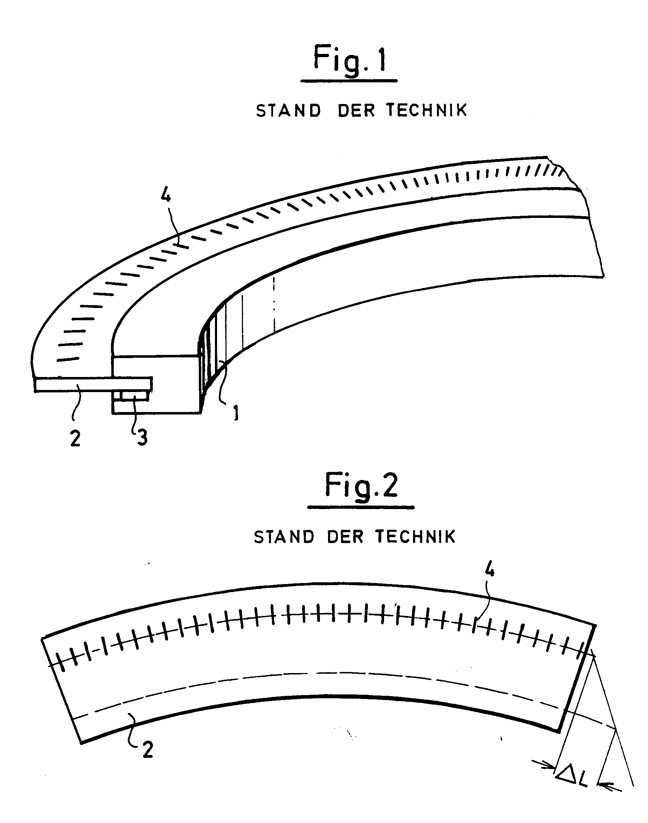

Bei solchen Meßsystemen kommt es aufgrund der unterschiedlichen thermischen Ausdehnungskoeffizienten zwischen Maßstab und Fassung bzw. Führungsteil zu Meßfehlern, die nachfolgend beispielhaft anhand von Fig. 1 und Fig. 2 erklärt werden. Dort ist mit (2) ein Durchlichtmaßstab aus Glas bezeichnet, der in der U-förmigen Nut einer Fassungsleiste (1) aus Aluminium mittels mehrerer, auf seiner Länge verteilter Gummistücke (3) gehalten ist. Die Haftreibung zwischen dem Maßstab (2) und der Fassung (1) und die ungleichen thermischen Ausdehnungskoeffizienten von Maßstab und Fassung haben bei wechselnden Temperaturen zur Folge, daß sich Maßstab und Fassung wie in Fig. 1 übertrieben dargestellt in der Ebene der Maßstabsteilung (4) verbiegen. Hierdurch wird die Teilung (4) gedehnt und gestaucht, wobei Längenänderungen L von bis zu 5 µm pro Meter Maßstabslänge auftreten können. Für Meßsysteme von z.B. Koordinatenmeßgeräten, die typischerweise eine Auflösung von 0,1 µm besitzen, ist dies ein offensichtlich nicht tolerierbarer Wert.

Besonders störend an diesem Effekt ist die Tatsache, daß sich der Maßstab hierbei nicht reproduzierbar verformt, sondern aufgrund der Reibung zwischen Maßstab (2) und Fassung (1) ein Hystereseverhalten zeigt. Es ist daher nicht ohne weiteres möglich, die Längenanderung ΔL der Meßteilung (0) mit Hilfe einer zusätzlichen Temperaturmessung am Maßstab zu ermitteln und das Meßergebnis der Längenmeßeinrichtung entsprechend zu korrigieren.

Im übrigen verformt sich der Maßstab (2) in der Fig. 2 gezeigten Weise auch aufgrund von Temperaturgradienten, die sich im Maßstab selbst ausbilden und sich aufgrund der schlechten Temperaturleitfähigkeit von Glas nicht ausgleichen können.

Thermische Einflüsse wirken sich jedoch nicht nur auf Maßstäbe aus, deren Meßteilung wie in Fig. 1 und 2 dargestellt außerhalb der neutralen Faser liegt und deshalb bei Biegeverformungen gestreckt und ges taucht wird. Wenn Temperaturgradienten im Maßstab auftreten, stimmt die vom Temperatursensor gemessene Temperatur evtl. nicht mit der mittleren Temperatur überein, die zur exakten Korrektur der Maßstabslänge anzusetzen ist. Außerdem ist der thermische Ausdehnungskoeffizient der für Maßstäbe häufig verwendeten preiswerten Glassorten nicht exakt bekannt, sondern schwankt je nach Lieferung, so daß ebenfalls aus diesem Grunde eine nachträgliche rechnerische Korrektur der Maßstabslänge nur mit beschränkter Genauigkeit möglich ist.

In der DE-A-36 35 511 ist bereits vorgeschlagen worden, die nicht reproduzierbaren Verformungen eines Maßstäbes aufgrund der Reibung zwischen Maßstab und Fassung dadurch zu vermindern, daß man den Maßstab frei von Zwangskräften auf rollbeweglichen Kugeln aufspannt. Hierdurch wird jedoch der Maßstab von seiner Fassung thermisch sehr stark isoliert, so daß sich noch größere Temperaturgradienten im Maßstab selbst und zwischen Maßstab und Fassung ausbilden können. Außerdem ist es bei dieser Art der Aufspannung schwierig, einen gleichbleibenden Abstand zwischen Maßstab und Geber einzuhalten, da der in der Regel relativ dünne Maßstab aufgrund seines Eigengewichtes zwischen den Aufspannpunkten durchhängt.

In der DE-B- 25 05 587 ist eine Längenmeßeinrichtung beschrieben, deren Glasmaßstab über eine Silikonkautschuk-Klebeschicht flächig auf seinem metallischen Träger befestigt ist. Es hat sich aber gezeigt, daß diese Art der Befestigung eine Verformung des Maßstäbes nicht zuverlässig vermeidet. Denn die elastischen Haftkräfte der Klebeschicht können insbesondere bei relativ dünnen Maßstäben noch unzulässig hoch sein.

Gleiches gilt für die in der DE-B- 11 76 382 vorgeschlagene Aufspannung des Maßstäbes auf eine zähflüssige Zwischenschicht aus Asphalt, auf der der Maßstab frei schwimmen soll. Diese Art der Befestigung ist im übrigen nur für waagerechte Einbaulagen des Maßstabs brauchbar. Eine schwimmende Lagerung des Maßstäbes wird in der EP 0 266 498 im übrigen als Vorurteil bezeichnet.

In der genannten DE-PS 11 76 382 ist weiterhin ein Ausführungsbeispiel beschrieben, in dem der Maßstab durch die Oberflächenspannung einer zwischen zwei Stegen auf der Fassung befindlichen Flüssigkeitsschicht gegen diese Stege gezogen wird. Durch den Kontakt zwischen dem Maßstab und den Stegen der Fassung entstehen jedoch wieder Reibkräfte was die eingangs genannten Nachteile zur Folge hat.

Die vorstehend beschriebenen Probleme treten natürlich auch in Winkelmeßeinrichtungen auf, die einen auf einem metallischen Träger befestigten Teilkreis aus Glas besitzen.

Es ist die Aufgabe der vorliegenden Erfindung eine Längen- oder Winkelmeßeinrichtung zu schaffen, die hinsichtlich thermischer FehlerEinflüsse möglichst unempfindlich reagiert.

Diese Aufgabe wird mit den im Kennzeichen des Anspruchs 1 angegebenen Maßnahmen dadurch gelöst, daß der Teilungsträger aus Material mit, in Bezug auf eine spezifizierte Meßunsicherheit der Meßeinrichtung, genau bekanntem oder vernachlässigbar kleinem thermischen Ausdehnungskoeffizienten besteht, mit mindestens einer seiner Flächen durch die Kapillarwirkung eines Flüssigkeitsfilms gegen eine entsprechende Fläche des Führungsteils gezogen ist und auf diesem Flüssigkeitsfilm flächig aufliegt und daß der Teilungsträger gegen Drehung bzw. Verschiebung auf dem Flüssigkeitsfilm gesichert ist.

Durch die Kombination dieser Maßnahmen werden thermische Einflüsse im Teilungsträger selbst wie auch an der Verbindungsstelle zu seiner Fassung bzw. dem Führungsteil, dem er zugeordnet ist, weitestgehend ausgeschaltet. Denn da der Teilungsträger nicht geklebt ist, sondern auf einem Flüssigkeitsfilm von wenigen µm Dicke frei schwimmt, tritt keinerlei Haftreibung auf, die zu unreproduzierbaren Verformungen des Teilungsträgers führen könnte. Gleichzeitig wird der Teilungsträger über die Kapillarwirkung mit einer ausreichend hohen Kraft gegen seine Auflagefläche gezogen, so daß auch beliebige Einbaulagen, sogar eine hängende Montage an der Unterseite einer Führung möglich sind.

Die Kapillarwirkung verhindert ein Herauslaufen der Flüssigkeit aus dem Spalt und zieht den Teilungsträger flächig an seine Unterlage an, so daß auch sehr dünne Maßstäbe die Ebenheit der Auflagefläche annehmen. Die flächige Auflage des Teilungsträgers auf den relativ dünnen Flüssigkeitsfilm sorgt außerdem für einen guten Temperaturausgleich zwischen Teilungsträger und Fassung und wirkt der Entstehung von Temperaturgradienten entgegen.

Es ist vorteilhaft, wenn der Teilungsträger aus einem Material mit genau bekanntem Ausdehnungskoeffizienten von weniger als 2 · 10⁻⁶ K⁻¹ besteht. Ein solches Material ist beispielsweise Quarzglas. Dann verbiegen evtl. noch verbleibende Temperaturgradienten im Maßstab diesen nicht mehr nennenswert. Zum Anderen läßt sich die rechnerische Korrektur der thermischen Längenausdehnung des Maßstäbes sehr genau vornehmen, da Quarzglas mit seinem ausreichend genau spezifizierten thermischen Ausdehnungskoeffizienten erhältlich ist.

Besonders vorteilhaft ist es jedoch, wenn der Teilungsträger aus einer Glaskeramik mit vernachlässigbar kleinem Ausdehnungskoeffizienten wie z.B. dem von der Firma Schott Glaswerke, Mainz unter dem Namen "Zerodur®" angebotenen Material besteht. Dann kann selbst bei Verwendung der Meßeinrichtung in hochgenauen Koordinatenmeßgeräten über einen zulässigen Temperaturbereich von 10K und mehr auf eine Temperaturmessung am Maßstab selbst verzichtet werden.

Die Flüssigkeit selbst sollte hinsichtlich ihrer physikalischen und chemischen Eigenschaften möglichst beständig und physiologisch unbedenklich sein. Als sehr geeignet hat sich hierfür Silikonöl erwiesen. Außerdem liegt die kinematische Viskosität der Flüssigkeit zweckmäßig in einem Bereich zwischen 3000 mm²/s und 60 000 mm²/s. Denn bei Verwendung noch höherer viskoser Flüssigkeiten wird die Zeitdauer, bis die Flüssigkeit während des Montagevorganges in den Spalt zwischen dem Teilungsträger und dem Führungsteil hineinkriecht und einen vollständigen Film aufbaut, zu groß. Verwendet man hingegen Flüssigkeiten mit noch niedriger Viskosität besteht die Gefahr, daß auf den Maßstab einwirkende Kräfte, beispielsweise kurzzeitige Beschleunigungskräfte, diesen von seiner Anlagefläche lösen.

Weitere Vorteile der Erfindung ergeben sich aus der nachfolgenden Beschreibung von Ausführungsbeispielen anhand der Figuren 3 bis 9 der beigefügten Zeichnungen.
- Fig. 1: ist eine perspektivische Darstellung einer Maßstabshalterung nach dem Stand der Technik;
- Fig. 2: ist eine vereinfachte Skizze, die den Maßstab aus Fig. 1 in Ansicht zeigt;
- Fig. 3: ist eine Prinzipskizze die ein erstes Ausführungsbeispiel eines Längenmeßsystems gemäß der Erfindung im Schnitt senkrecht zur Maßstabsachse zeigt;
- Fig. 4: zeigt den Maßstab aus Fig. 3 mit seiner Fassung in Aufsicht;
- Fig. 5: zeigt den Maßstab eines zweiten Ausführungsbeispiels mit seiner Fassung im Schnitt;
- Fig. 5a: zeigt den Maßstab eines gegenüber Fig. 5 leicht abgewandelten Ausführungsbeispiels mit seiner Fassung im Schnitt;
- Fig. 6: zeigt den Maßstab eines dritten Ausführungsbeispiels im Schnitt;
- Fig. 7: ist eine perspektivische Skizze der mit einer Längenmeßeinrichtung gemäß der Erfindung versehenen Pinole eines Koordinatenmeßgerätes;
- Fig. 8: ist ein Schnitt entlang der Linie VIII-VIII in Fig. 7 in vergrößertem Maßstab;
- Fig. 9: ist ein Schnitt, der einen Maßstab in seiner Fassung gemäß einem weiteren Ausführungsbeispiel der Erfindung zeigt;
- Fig. 10: zeigt eine gemäß der Erfindung aufgebaute Winkelmeßeinrichtung im Schnitt.

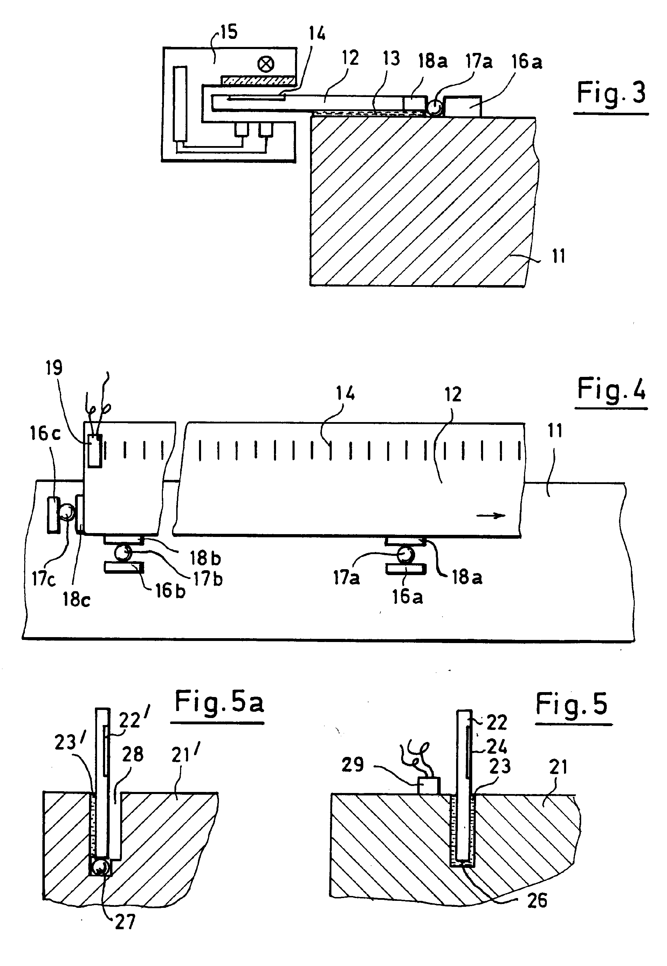

In Fig. 3 ist mit (11) das feststehende Führungsteil eines z.B. Koordinatenmeßgerätes bezeichnet, an dem ein hier nicht dargestellter Meßschlitten in Richtung senkrecht zur Papierebene beweglich geführt ist. An diesem Meßschlitten ist ein photoelektrischer Geber (15) befestigt.

Am Führungsteil (11) ist außerdem der Maßstab (12) zur Messung der Schlittenverschiebung angebracht.

Der Maßstab (12) besteht aus Quarzglas, dessen differentieller thermischer Ausdehnungskoeffizient bis auf einen Wert von ± 2 · 10⁻⁸ K⁻¹ genau bekannt ist. Der Maßstab (12) wird mit seiner Unterseite durch die Kapillarwirkung eines dünnen Flüssigkeitsfilms (13) gegen die ebene Oberseite am Führungsteil (11) gezogen. Dabei steht der Maßstab etwa mit der Hälfte seiner Breite über die Kante des Führungsteils vor. Die überstehende Seite des Maßstabs (12) trägt die Maßstabsteilung (14), beispielsweise eine inkrementale Gitterteilung, die von dem im Querschnitt U-förmigen Geber (15) umgriffen und im Durchlicht abgetastet wird.

Der Flüsigkeitsfilm (13) besteht aus Silikonöl mit einer kinematischen Viskosität vor 5000 mm²/s und hat etwa eine Dicke von ca. 8µm. Als Silikonöl werden Mischungen von Dimethylpolysiloxanen unterschiedlicher Kettenlänge bezeichnet, wobei sich die Viskosität des Öls durch das Mischungsverhältnis einstellen läßt.

Erzeugt wird der Flüssigkeitsfilm dadurch, daß der Maßstab (12) an das Führungsteil (11) angelegt wird und das Silikonöl an der Kante des Führungsteils (11) entlang des Maßstabs appliziert wird. Das Öl kriecht dann zwischen die Unterseite des Maßstabs (12) und die Oberseite des Führungsteils (11) und baut dabei einen geschlossenen Film auf, dessen Stärke sich selbsttätig auf den genannten Wert einstellt.

Gegen Drehen und Verschieben auf dem Flüssigkeitsfilm (13) ist der Maßstab (12) durch drei reibungsarme Anschläge gesichert. Hierfür liegen Stahlkugeln (17a,17b und 17c) an den ebenen Flächen dreier Magnete (16a,16b und 16c) an, die auf dem Führungsteil (11) befestigt sind. Der Maßstab (12) seinerseits stützt sich auf den Kugeln (17a-c) über an seiner Stirnseite im Bereich der Kugeln angeklebte Stahlplättchen (18a-c) ab und wird aufgrund der Magnetkräfte mit geringer Kraft gegen diese Anschläge gezogen. Die Magnetkräfte halten außerdem die Kugeln (17a-c) im Bereich der Anschläge fest, ohne die Rollbeweglichkeit zu behindern.

Obwohl der Flüssigkeitsfilm den Maßstab (12) aufgrund der Kapillarwirkung mit hoher Kraft gegen die Oberfläche des Führungsteils (11) zieht, werden bei unterschiedlicher thermischer Längenausdehnung von Führungsteil (11) und Maßstab (12) keine Zwangskräfte auf den Maßstab ausgeubt, da die sogenannte Newton'sche Reibung im Flüssigkeitsfilm (13) proportional zur Geschwindigkeit der Längenänderung ist und die thermische Ausdehnung von Maßstab bzw. Führungsteil äußerst langsam erfolgt.

Dem Maßstab (12) ist weiterhin ein Temperatursensor (19) zugeordnet, um die Längenausdehnung des Maßstabmaterials Quarz rechnerisch berücksichtigen zu können.

Im Ausführungsbeispiel nach Fig. 5 ist der dort mit (22) bezeichnete Maßstab hochkant in eine Nut des Führungsteils (21) eingesetzt. Hier ist die Breite der Nut etwas größer als die Dicke des Maßstabs (22) gewählt, so daß beidseitig Kapillarspalte entstehen, die mit einem Flüssigkeitsfilm (23) gefüllt werden können. Mit seiner Schmalseite ruht der Maßstab (22) ebenfalls auf einem Flüssigkeitsfilm. Nicht dargestellt ist in der Zeichnung eine Feder, die den Maßstab (22) in Richtung senkrecht zur Zeichenebene gegen einen Anschlag druckt.

Im Ausführungsbeispiel nach Fig. 5 besteht der Maßstab aus der Glaskeramik Zerodur®. Der Ausdehnungskoeffizient dieses Materials ist vernachläsigbar klein und wird vom Hersteller sogar über einen relativ großen Temperaturbereich zwischen 0°C und 50°C mit 0 ± 0,05 · 10⁻⁶ garantiert, so daß auf einen Temperatursensor am Maßstab selbst verzichtet werden kann. Der Temperatursensor (29) am Führungsteil (21) dient allein dazu, die Längenausdehnung des Führungsteils (21) zu messen.

Im Ausführungsbeispiel nach Fig. 5 muß die Dicke des Maßstabes (22) sehr eng, nämlich innerhalb der Dicke des Flüssigkeitsfilms (23) toleriert sein, damit keine direkte Berührung von Maßstab (22) und Führungsteil (21) stattfindet, was Reibung verursachen würde. Gleiches gilt auch für die Ebenheit der Schmalseite des Maßstabes (22), mit der dieser am Boden der Nut im Führungsteil schwimmt. Wenn man diese Toleranzanforderungen nicht einhalten will, empfiehlt sich für die stehende Montage das Ausführungsbeispiel nach Fig. 5a. Dort ist der Maßstab (22′) in eine im Vergleich zu seiner Dicke sehr viel breitere Nut (28) eingesetzt und wird einseitig durch die Kapillarwirkung eines Flüssigkeitsfilms (23') an eine der Flächen der Nut gezogen. Mit seiner unteren Schmalseite liegt er auf Kugeln (27) auf, die in diesem Falle den reibungsarmen Anschlag bilden.

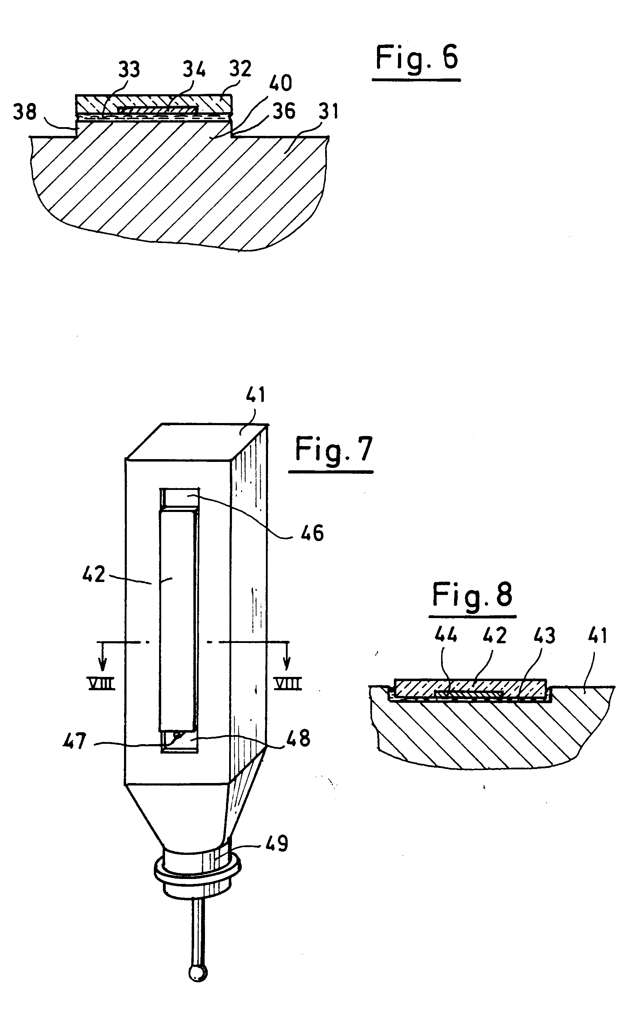

In den vorstehenden Ausführungsbeispielen wurden jeweils Durchlichtmaßstäbe dargestellt. Die Erfindung läßt sich jedoch auch sehr vorteilhaft bei Auflichtmaßstäben einsetzen. Im Ausführungsbeispiel nach Fig. 6 liegt ein Auflichtmaßstab (32) vollflächig über einen Flüssigkeitsfilm (33) auf dem zugehörigen Führungsteil (31) auf. Im Bereich der Auflagefläche besitzt das Führungsteil (31) einen Steg (40), dessen Breite der des Maßstabs (32) entspricht. Das hat zur Folge, daß die Kapillarkräfte des Flüssigkeitsfilms (33) selbst ein seitliches Verschieben oder Verdrehen des Maßstabs (32) verhindern. Separate Anschläge brauchen deshalb in diesem Falle nur in Längsrichtung des Maßstabs vorgesehen werden. Die Teilung (34) des Maßstabs (32) befindet sich an dessen Unterseite und grenzt an den Flüssigkeitsfilm (33) an. Die Teilung (34) ist deshalb auch auf einfache Art und Weise gegen Beschädigungen und Verschmutzung gesichert.

Das gilt auch für den Auflichtmaßstab (42) im Ausführungsbeispiel nach Fig. 7 und 8. Dieser Maßstab (42) ist stehend in eine flache Nut an der vertikalen Pinole (41) eines Koordinatenmeßgerätes eingesetzt und wird dort durch die Kapillarkraft eines Flüssigkeitsfilms (43) zwischen der Teilungsseite des Maßstabs (42) und dem Boden der Nut (46) gehalten. Die Breite der Nut ist etwas größer als die des Maßstabes, so daß sich der Flüssigkeitsfilm (43) auch an den Schmalseiten des Maßstabs (42) ausbilden und diesen gegen ein seitliches Verschieben oder Verdrehen sichern kann, Mit seinem Eigengewicht sitzt der Maßstab (42) auf einem zylindrischen Anschlag (47) an der Pinole (41) auf. Im Ausführungsbeispiel nach Fig. 7 und 8 bildet ebenso wie im Ausführungsbeipiel nach Fig. 5 der Flüssigkeitsfilm selbst den seitlichen Anschlag für den Maßstab.

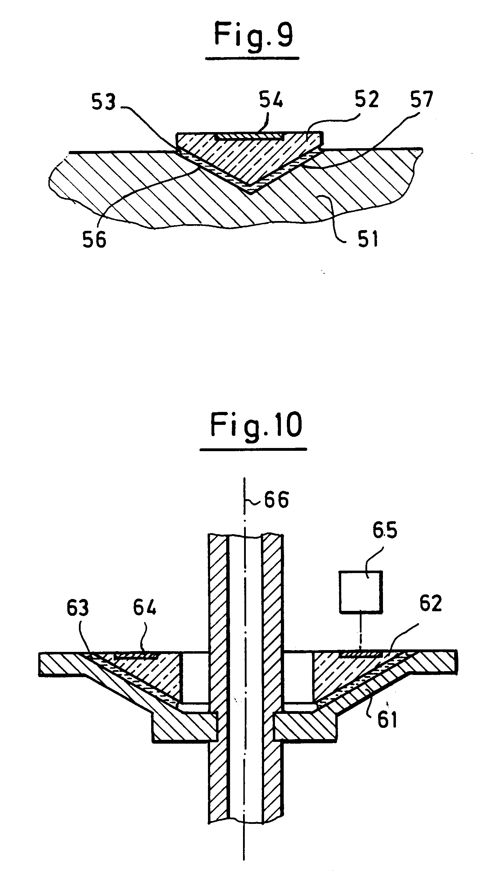

Die bisher beschriebenen Maßstäbe besaßen jeweils einen rechteckigen Querschnitt. Natürlich ist es ebenfalls möglich wie in Fig. 9 dargestellt z.B. Teilungsträger (52) mit dreieckigem Querschnitt über die Kapillarwirkung eines Flüssigkeitsfilms (53) sicher zu halten. Hier schwimmt der Maßstab (52) Zwangskräfte frei auf den Flächen (56 und 57) einer im Querschnitt V-förmigen Nut im Führungsteil (51). Er ist außerdem auf diese Weise gegen seitliches Verschieben oder Verdrehen gesichert.

Mit den vorstehend beschriebenen Maßnahmen läßt sich auch der Teilkreis eines Winkelmeßinstrumentes zwangskräftefrei fassen. Ein entsprechendes Ausführungsbeispiel ist in Fig. 10 dargestellt. Dort wird der im Querschnitt keilförmige Teilkreis (62) durch die Kapillarwirkung eines Flüssigkeitsfilms (63) zentrisch gegen die konische Gegenfläche seines metallischen Trägers gezogen und schwimmt auf diesen Flüssigkeitsfilm reibungsfrei. Bei thermischen Ausdehnungen des Trägers (61) bleibt der Teilkreis (62) zur Drehachse (66) zentriert, so daß kein Schlagfehler auftritt, der die Ablesung der Teilung (64) durch den photoelektrischen Geber (65) verfälschen würde.

Gegen Drehbewegungen relativ zum Träger (62) ist der Teilkreis (62) durch einen nicht dargestellten Anschlag, beispielsweise in Form einer radial verlaufenden Nut, gesichert.

## Patentansprüche

1. Längen- oder Winkelmeßeinrichtung mit einem Teilungsträger, der in der Fassung an einem Führungsteil gehalten ist, das einen vom Teilungsträger abweichenden thermischen Ausdehnungskoeffizienten besitzt, dadurch gekennzeichnet, daß der Teilungsträger (12;22;32;42;52;62) aus Material mit, in Bezug auf eine spezifizierte Meßunsicherheit der Meßeinrichtung, genau bekanntem oder vernachlässigbar kleinem thermischen Ausdehnungskoeffizienten besteht, mit mindestens einer seiner Flächen durch die Kapillarwirkung eines Flüssigkeitsfilms (13;23;33;43;53;63) gegen eine entsprechende Fläche des Führungsteils (11;21;31;41;51;61) gezogen ist und auf diesem Flüssigkeitsfilm flächig aufliegt und daß der Teilungsträger gegen Drehung bzw. Verschiebung auf dem Flüssigkeitsfilm gesichert ist.

2. Längen- oder Winkelmeßeinrichtung nach Anspruch 1, dadurch gekennzeichnet, daß der Teilungsträger (12) aus Material mit einem, in Bezug auf eine spezifizierte Meßunsicherheit der Meßeinrichtung, genau bekannten thermischen Ausdehnungskoeffizienten von weniger als 2 · 10⁻⁶ K⁻¹ besteht.

3. Längen- oder Winkelmeßeinrichtung nach Anspruch 1, dadurch gekennzeichnet, daß der Teilungsträger (22) aus einer Glaskeramik mit, in Bezug auf eine spezifizierte Meßunsicherheit der Meßeinrichtung, vernachlässigbar kleinem thermischen Ausdehnungskoeffizienten besteht.

4. Längen- oder Winkelmeßeinrichtung nach Anspruch 1, dadurch gekennzeichnet, daß der Teilungsträger (12;22) ein Durchlichtmaßstab eines photoelektrischen Längenmeßsystems ist, wobei der Maßstab einseitig in seiner Fassung gehalten ist und die Maßstabsteilung (14;24) außerhalb der neutralen Faser Symmetrieachse des Maßstabs liegt.

5. Längen- oder Winkelmeßeinrichtung nach Anspruch 1, dadurch gekennzeichnet, daß der Teilungsträger (32;42) ein Auflichtmaßstab eines photoelektrischen Gittermeßsystems ist.

6. Längen- oder Winkelmeßeinrichtung nach Anspruch 5, dadurch gekennzeichnet, daß die Teilung (34;44) auf der Seite des Maßstabs ((32;42) aufgebracht ist, die an den Flüssigkeitsfilm (33,43) grenzt.

7. Längen- oder Winkelmeßeinrichtung nach Anspruch 1, dadurch gekennzeichnet, daß der Teilungsträger (42;52) mindestens mit zwei Flächen an den Flüssigkeitsfilm (43;53) angrenzt.

8. Längen- oder Winkelmeßeinrichtung nach Anspruch 1, dadurch gekennzeichnet, daß der Teilungsträger (22;42) mit senkrechter Ausrichtung seiner Anlagefläche in der Fassung gehalten ist.

9. Längen- oder Winkelmeßeinrichtung nach Anspruch 1, dadurch gekennzeichnet, daß der Teilungsträger durch Kugeln (17a,17b,17c) gegen Verdrehen und Verschieben auf dem Flüssigkeitsfilm (13) gesichert ist.

10. Längen- oder Winkelmeßeinrichtung nach Anspruch 1, dadurch gekennzeichnet, daß der Teilungsträger durch mindestens eine zurückspringende Kante (36,38) der Anlagefläche am Führungsteil (51) gegen Verdrehen und Verschieben auf dem Flüssigkeitsfilm (33) gesichert ist.

11. Längen- oder Winkelmeßeinrichtung nach Anspruch 1, dadurch gekennzeichnet, daß die kinematische Viskosität der Flüssigkeit im Bereich zwischen 3000 mm²/s und 60 000 mm²/s liegt.

12. Längen- oder Winkelmeßeinrichtung nach Anspruch 1, dadurch gekennzeichnet, daß die Flüssigkeit (23;33;43;53) Silikonöl ist.

## Claims

1. A length or angle measuring device having a graduation support which is held in the mount on a guide part which has a coefficient of thermal expansion that differs from that of the graduation support, characterized by the fact that the graduation support (12; 22; 32; 42; 52; 62) consists of a material having a coefficient of thermal expansion that is precisely known or negligibly small compared to a specific measuring uncertainty of the measuring apparatus, that at least one of the surfaces at the graduation support is drawn by the capillary action of a liquid film (13; 23; 33; 43; 53; 63) against a corresponding surface of the guide part (11; 21; 31; 41; 51; 61) and lies areally on said liquid film, and that the graduation support is secured against turning or displacement on the liquid film.

2. A length or angle measuring device according to claim 1, characterized by the fact that the graduation support (12) consists of material having compared to a specific measuring uncertainty of the measuring apparatus a precisely known coefficient of thermal expansion of less than 2 x 10⁻⁶ K⁻¹.

3. A length or angle measuring device according to claim 1, characterized by the fact that the graduation support (22) consists of a glass ceramic having compared to a specific measuring uncertainty of the measuring apparatus a negligibly small coefficient of thermal expansion.

4. A length or angle measuring device according to claim 1, characterized by the fact that the graduation support (12; 22) is a transparent scale of a photoelectric length-measuring system, the scale being held on one side in its mount and the scale graduation (14; 24) lying outside the neutral axis symmetry axis of the scale.

5. A length or angle measuring device according to claim 1, characterized by the fact that the graduation support (32; 42) is a scale, illuminated by incident light, of a photoelectric grating measurement system.

6. A length or angle measuring device according to claim 5, characterized by the fact that the graduation (34; 44) is placed on the side of the scale (32; 42) that adjoins the liquid film (33; 43).

7. A length or angle measuring device according to claim 1, characterized by the fact that at least two surfaces of the graduation support (42; 52) adjoin the liquid film (43; 53).

8. A length or angle measuring device according to claim 1, characterized by the fact that the graduation support (22; 42) is held in the mounting with vertical alignment of its resting surface.

9. A length or angle measuring device according to claim 1, characterized by the fact that the graduation support is secured against turning and displacement on the liquid film (13) by balls (17a; 17b; 17c).

10. A length or angle measuring device according to claim 1, characterized by the fact that the graduation support is secured on the guide part (51) against turning and displacement on the liquid film (33) by at least one recessed edge (36; 38) of the resting surface.

11. A length or angle measuring device according to claim 1, characterized by the fact that the kinematic viscosity of the liquid is within the range between 3,000mm²/s and 60,000mm²/s.

12. A length or angle measuring device according to claim 1, characterized by the fact that the liquid (23; 33; 43; 53) is silicone oil.

## Revendications

1. Dispositif de mesure des longueurs ou des angles, comprenant un support de graduation qui est tenu dans la monture prévue sur un élément de guidage qui possède un coefficient de dilatation thermique différent de celui du support de graduation, caractérisé en ce que le support de graduation (12 ; 22 ; 32 ; 42 ; 52 ; 62) est composé d'une matière possédant des coefficients de dilatation thermique exactement connus ou d'une valeur négligeable, relativement à une insécurité de mesure spécifiée du dispositif de mesure, est attiré, au droit d'au moins une de ses surfaces, contre une surface correspondante de l'élément de guidage (11 ; 21 ; 31 ; 41 ; 51 ; 61) par l'effet capillaire d'un film de liquide, et repose à plat sur ce film de liquide (13 ; 23 ; 33 ; 43 ; 53 ; 63), et en ce que le support de graduation est bloqué en rotation ou en translation sur le film de liquide.

2. Dispositif de mesure des longueurs ou des angles selon la revendication 1, caractérisé en ce que le support de graduation (12) est composé d'une matière possédant un coefficient de dilatation thermique connu avec précision, relativement à une insécurité de mesure spécifiée du dispositif de mesure, de moins de 2 . 10⁻⁶ K⁻¹.

3. Dispositif de mesure des longueurs ou des angles selon la revendication 1, caractérisé en ce que le support de graduation (22) est composé d'une céramique vitreuse possédant un coefficient de dilatation thermique d'une valeur suffisamment petite pour être négligeable relativement à une insécurité de mesure spécifiée du dispositif de mesure.

4. Dispositif de mesure des longueurs ou des angles selon la revendication 1, caractérisé en ce que le support de graduation (12 ; 22) est une règle étalon à lumière transmise appartenant à un système de mesure des longueurs photo-électrique, la règle étalon étant tenue unilatéralement dans sa monture et la graduation (14 ; 24) de la règle étalon étant située en dehors de la fibre neutre (axe de symétrie) de la règle étalon.

5. Dispositif de mesure des longueurs ou des angles selon la revendication 1, caractérisé en ce que le support de graduation (32 ; 42) est une règle étalon à lumière réfléchie appartenant à un système de mesure photo-électrique du type grille.

6. Dispositif de mesure des longueurs ou des angles selon la revendication 5, caractérisé en ce que la graduation (34 ; 44) est formée sur la face de la règle étalon (32 ; 42) qui forme la limite avec le film de liquide (33, 43).

7. Dispositif de mesure des longueurs ou des angles selon la revendication 1, caractérisé en ce que le support de graduation (42 ; 52) forme la limite avec le film de liquide (43 ; 53) par au moins deux surfaces.

8. Dispositif de mesure des longueurs ou des angles selon la revendication 1, caractérisé en ce que le support de graduation (22 ; 42) est tenu dans la monture avec orientation verticale de sa surface d'appui.

9. Dispositif de mesure des longueurs ou des angles selon la revendication 1, caractérisé en ce que le support de mesure est immobilisé à l'encontre de la rotation ou de la translation sur le film de liquide (13) par des billes (17a, 17b, 17c).

10. Dispositif de mesure des longueurs ou des angles selon la revendication 1, caractérisé en ce que le support de graduation est immobilisé à l'encontre de la rotation et de la translation sur le film de liquide (33) par au moins un bord en retrait (36, 38) de la surface de contact portée par l'élément de guidage (51).

11. Dispositif de mesure des longueurs ou des angles selon la revendication 1, caractérisé en ce que la viscosité cinématique du liquide est comprise dans l'intervalle d'entre 3 000 mm²/s et 60 000 mm²/s.

12. Dispositif de mesure des longueurs ou des angles selon la revendication 1, caractérisé en ce que le liquide (23 ; 33 ; 43 ; 53) est une huile de silicone.
